# EUROPEAN PATENT APPLICATION

(11) **EP 4 685 006 A1**
(43) Date of publication of application: **28.01.2026**
(21) Application number: 25190641.8
(22) Date of filing: 21.07.2025
(51) Int. Cl.: B60L 50/64, B60L 50/60, B60L 53/80, H01M 6/52, H01M 10/42, B60L 50/30, B60L 50/40

(54) **A METHOD OF OPERATING A PROFESSIONAL ELECTRIC VEHICLE, A VEHICLE SUITABLE FOR USING THIS METHOD AND A BATTERY FOR USE IN THE SAID METHOD AND VEHICLE**

(30) Priority: 23.07.2024 NL 2038297
(71) Applicant: Zemquest B.V., 2201 BB Noordwijk (NL)
(72) Inventor: KRUIJFF, Michiel, 2318 NJ Leiden (NL); VRIESINGA, René Franciscus, deceased (NL); DE HAAS, David, 2318 MC Leiden (NL); DE HAAS, Erik Peter, 2318 NC Leiden (NL)
(74) Representative: Janssen, Paulus J. P.

(57) **Abstract**

The invention pertains to a method of operating a professional vehicle, which vehicle has an electric motor for driving the said vehicle, and a battery operatively coupled to the vehicle for providing the electric energy to the electric motor, the method comprising the steps of using as the said battery an aluminium air battery, which battery comprises multiple cells, each cell comprising a solid aluminium element immersed in an electrolyte composition, the cells being present in multiple separate battery units, each unit comprising multiple cells electrically coupled in series, which units are electrically coupled in parallel, thereby forming the said battery, in a timeframe of 24 hours, driving the vehicle and extracting at least 400 kWh of energy from the said battery, until this battery is functionally empty, decoupling the functionally empty battery from the vehicle, operatively coupling a functionally full battery to the vehicle, release each of the said battery units as separate individual units from the functionally empty battery, and for each of the said separate individual battery units released from the functionally empty battery, 1) removing the aluminium elements from each corresponding cell, and 2) positioning unused solid aluminium elements in each of the cells in one single uninterruptible process step, and reassemble a new battery by electrically coupling in parallel, multiple of the said units that have been provided with unused solid aluminium elements. The invention also pertains to a professional vehicle for use in the present method, and to a battery for use in the method and vehicle.

## Description

### GENERAL FIELD OF THE INVENTION

The invention in general pertains to professional electric vehicles, such as electric buses, tractors, cranes, lorries, airplanes, ferries, tactical vehicles etc., and the way of operating such vehicles. As any electric vehicle, these vehicles have an electric motor for driving the said vehicle, and a battery operatively coupled to the vehicle for providing the electric energy to the electric motor. These professional electric vehicles differ principally from electric (private) cars in that they use a large amount of energy, substantially more than the 50-100 kWh for private cars per 24 hours. Another essential difference is that endurance (i.e. the relative amount of hours that the vehicle can be driven, e.g. over 16 hours per 24 hours equals an endurance of more than 67%) is highly important, which means that the reliability of the electric drive train, in particular the energy storage medium, is even more important than for private cars.

### BACKGROUND OF THE INVENTION

Over the last several years, the electric vehicle sector has seen a growth in the desire for professional electric vehicles such as heavy-duty trucks, semi-trucks, delivery vans, excavators, shovels, caterpillars and other professional vehicles.

The electrification of these medium and heavy-duty transport methods has become a vital component in the reduction of greenhouse gas emissions. In 2019 in the U.S. alone, these vehicles alone emitted 444 million metric tons of carbon dioxide. And since 1990, the percentage of greenhouse gas emissions (GHG) from these modes of transportation has increased by more than 90 percent. In the U.S. they account for 18 percent of global road freight CO2 emissions, while in Europe this is even higher.

The electrification of trucking and other professional vehicles has the potential to vastly decrease the carbon impact that the industry is making. More manufacturers are pushing to launch their EV models to become a part of this new ecosystem dedicated to finding a long-term solution to sustainable professional transportation. While the manufacturers are the ones building out these new electric heavy-duty trucks, vans, and other vehicles, the efforts do not fall on them alone. Logistics and retail companies, constructors and local governments need to be involved and aligned to reach the goal.

Within the next few years, many of the existing vehicle producers plan to not only introduce their electrified trucking fleets, but to become leaders in a space that needs to see significant change to make a lasting impact on GHG emissions. According to a report by Quince Market Insight, in 2021, the global electric truck market size was valued at $670 million and is projected to grow by 23.5 percent between 2020 and 2030.

Companies such as Ford and Rivian continue to replace gasoline and diesel-powered professional vehicles, along with the introduction of more consumer-based vehicles such as pickups. Still, several other global manufacturers are prepared to roll out more electric trucks and delivery vans, notably the General Motors company Brightdrop, which has already made a big splash in 2021.

While everyone agrees the journey to electrify trucking will take years to find its way, there are still a lot of hurdles to take, which in particular have to do with the high power demand of these professional vehicles, the need for high endurance and thus, low down time for e.g. charging, the need for high capacity charging stations and the need for batteries that are versatile, thus, not with a dedicated constitution making them only suitable for use in one particular type of vehicle.

European and North American electric bus and truck makers rely heavily on Asian battery makers. Given their dominance in lithium iron phosphate (LFP) battery chemistries, China produces the vast majority of batteries for trucks. However, spurred on by industrial policies - the European Union's Green Industrial Plan and the United States' IRA - truck makers have already begun to build or are announcing investments in new production facilities for heavy-duty battery packs (such as Volvo's 2.7 GWh plant, which opened in Sweden in 2022). Truck makers have also entered collaborations with major cell makers, seeking to secure further opportunities for vertical integration.

More than 95% of heavy-duty trucks produced in China were equipped with LFP cathode chemistries in 2021. The durability and lower cost of LFP batteries make them the preferred choice not only because of the high lifetime mileage needed for professional operations, but also because price is a concern for bus and truck buyers: over half of truck purchases are leases or rely on loans.

The battery capacity of currently available professional and announced models within a given vehicle type generally correlates with declared vehicle range. The average battery capacity has generally increased across most professional vehicle categories from about 150 kWh in 2019 to a maximum of about 350 kWh in 2023. However, for many applications this is still on the low side to provide for high endurance.

This is why the art aims at developing very high-capacity lithium batteries, and fast recharging options for these batteries in order to keep the down time of a vehicle low. A problem however is that the electricity grid in many areas is limiting the amount of electric power tat can be used to recharge large batteries. This so-called grid congestion is already at its peak with the increased domestic electrification demand and supply, and this is not expected to be alleviated in the short term. One solution is to create local network with local generators for electric power. This however needs high additional investments.

### OBJECT OF THE INVENTION

It is an object of the present invention to devise a method of operating a professional electric vehicle, which vehicle is designed to use a high amount of energy of at least 400 kWh per 24 hours. The method should allow a highly efficient use of the vehicle (not much down time, a high endurance), requiring a reliable, easy to reload and preferably versatile battery.

### SUMMARY OF THE INVENTION

In order to meet the object of the invention, a method of operating a professional electric vehicle as identified here above in the section GENERAL FIELD OF THE INVENTION has been devised, the method comprising the steps of using as the said battery an aluminium air battery, which battery comprises multiple cells, each cell comprising a solid aluminium element immersed in an electrolyte composition, the cells being present in multiple separate battery units, each unit comprising multiple cells electrically coupled in series, which units are electrically coupled in parallel, thereby forming the said battery, and then in a timeframe of 24 hours, driving the vehicle and extracting at least 400 kWh of energy from the said battery, until this battery is functionally empty (which may take longer than 24 hours, as long as per 24 hours at least 400 kWh of energy is extracted), decoupling the functionally empty battery from the vehicle, operatively coupling a functionally full battery to the vehicle, release each of the said battery units as separate individual units from the functionally empty battery, and for each of the said separate individual battery units released from the functionally empty battery, 1) removing the aluminium elements from each corresponding cell, and 2) positioning unused solid aluminium elements in each of the cells in one single uninterruptible process step, and lastly reassemble a new battery by electrically coupling in parallel, multiple of the said units that have been provided with unused solid aluminium elements.

The method is thus advantageously devised for professional vehicles that use a high amount of electric energy, above 400 kWh per 24 hours of service. The applicant had the insight that the problem of recharging the batteries for such vehicles can be substantially mitigated, if not overcome, by leaving the common procedure of recharging the battery when empty (and thus waiting until the vehicle can be driven again), and instead, by simply replacing the empty battery for a full one when empty, that at the same time may provide the endurance required for a professional vehicle's 24 h duty cycle within the limited volume and mass budget available. The applicant realised that there is a further option for improvement by using as the type of battery a so-called aluminium air battery. These batteries have a very high energy density. Indeed, they cannot be recharged, but in a method wherein an empty battery is exchanged for a new (functionally full) one, this is not a problem. Still, in order to meet the object of being more reliable, it was applicant's insight that the battery should be constituted in the form of multiple battery units electrically coupled in parallel (not excluding that other units are coupled in series in the same battery; thus a minimum of two units coupled in parallel is encompassed by the appended claims, even if the battery as a whole comprises more units). This provides at least two advantages that help in achieving the object: if one particular cell in one specific unit fails, one could simply de-couple the whole corresponding unit. This means that the battery as a whole can still provide electric energy at the required voltage (although the total capacity is somewhat lower). A second and very important advantage came about when the applicant realised that a relatively small battery unit (typically of 12-96, or preferably up to 48 cells cells) provides the option of easy exchange of the solid aluminium elements, and optionally also the electrolyte, when a battery unit is empty. A large1000 kWh aluminium air battery is so bulky that any exchange of aluminium elements (and optionally the electrolyte) will become very difficult to automate. However, relatively small battery units provide the option of positioning the aluminium elements in all corresponding cells in one single uninterruptible process step (thus not one by one in separate consecutive steps as is common in the art of aluminium air batteries), for example by uniting all elements for one unit with a simple clamping action and then positioning all elements in one movement by securely positioning the clamp. For removing used solid aluminium elements (or at least the remnants thereof) from each of the cells, such a clamping action can also be used. Overall, this makes the re-activation process of the battery (removing the used elements, optionally also the electrolyte, and positioning new elements in the unit) relatively simple, and thus economic viable. Lastly, by having such practically sized (relatively small) battery units, any new battery of any size and shape can be reassembled using these small battery units. This makes the method very versatile.

Also, the new battery allows for a relatively easy battery management system. The operative condition of each unit can be assessed during the extraction of power (e.g. by measuring voltage output, or any other parameter that corresponds to the operative condition), and if the condition of one particular unit is outside of a predetermined range, the respective unit can be electrically decoupled. Given the fact that the units are coupled in parallel, the output voltage of the battery remains unaltered.

It is noted that the battery does not necessarily need to be a physical part of the vehicle. It may be that the battery is at a remote site, and that the battery is operatively connected to the vehicle via an electric connection, typically using conductive cables etc.

It is also noted that the re-activation of the battery units may be done in situ, thus at the site where the vehicle is located, which means that typically the same battery units will be used to reassemble the new battery. Thus, in the appended claims, the step of putting a functionally full battery in the vehicle may also be the last step of the method. And although this takes time, it may still be faster than a process of electrically recharging for example a lithium battery.

However, it is also an option, in order to further increase the endurance of the vehicle, to have a replacement battery in place when the vehicle needs a new battery, swap the batteries, and transport the empty battery to a remote location for re-activation (i.e. replacing the solid aluminium elements, optionally the electrolyte and possible other components if needed.

Choosing for an aluminum air battery is in fact counter intuitive: whilst recharging is an essential feature for any electric vehicle, these batteries cannot be recharged. Instead, they can be reactivated. In the art that has always been seen as a disadvantage, but when constituting a battery as an assembly of smaller battery units, the reactivation process can be very simply, easy to automate and thus fast and economically advantageous. A major advantage is that the method is completely independent from the local and instant capacity of the electricity network.

It is noted that aluminium air batteries as such for providing power to electric vehicles is known in the art. For example, in March 2013 the Israeli company Phinergy released a video demonstration of an electric car using an aluminium-air battery driven 330 km using a special cathode and potassium hydroxide. On May 27, 2013, the Israeli channel 10 evening news broadcast showed a car with Phinergy battery in the back, claiming 2,000 kilometres range before replacement of the aluminium anodes was necessary. However, so far the aluminium air technology is only applied for vehicles where the daily energy need is limited, where the available volume and mass budget does not allow to make the best use of a modular and mono-materials based solution for low-cost construction and fast, automated reactivation, and where an extensive consumer-oriented swapping and logistics infrastructure would be required.

US 5,558,947 mentions the aluminium air technology as an option for powering an electric vehicle. However, it is described that the technology suffers from the fact that the battery cannot be recharged. The technology proposed in the '947 patent therefore is a chemically rechargeable metal air battery, wherein next to the replacement of the electrolyte the metal is added in the form of powdered particles.

Also known in the art are metal air batteries based on different kinds of metal such as zinc or lead, in particular using zinc or lead plates (corresponding to the lead plates used in common lead acid batteries). However, such zinc or lead air batteries are not advantageously suitable for use in the present method due to the low rigidity of zinc or lead elements. This means that removing such elements in one go by connecting these elements induces high risk of damaging the plates, or requires all kinds of construction in order to keep the plates intact.

For example, US 5,405,713 and WO92/02964 both describe zinc-air battery technology for vehicles that require relatively low amounts of energy per 24 hour. Importantly, apart from the fact that only zinc is described as useful metal in these documents, there is no disclosure or suggestion for constituting the battery from multiple separate battery units, which units are electrically coupled in parallel. This is an essential feature of the present invention.

The invention also pertains to a professional vehicle, which vehicle has an electric motor for driving the said vehicle, and a battery operatively coupled to the vehicle for providing electric energy to the electric motor, the said battery being an aluminium air battery, which battery comprises multiple cells, each cell comprising a solid aluminium element immersed in an electrolyte composition, the cells being present in multiple separate battery units, each unit comprising multiple cells electrically coupled in series, which units are electrically coupled in parallel, thereby forming the said battery, the vehicle being designed to use in a timeframe of 24 hours at least 400 kWh, wherein the aluminium elements from each corresponding cell in one battery unit are operatively couplable for positioning of all of these elements in this battery unit in one uninterruptible process step.

The invention also pertains to an aluminium air battery for use in the method or vehicle according to the invention as described here above, which battery comprises multiple cells, each cell comprising a solid aluminium element immersed in an electrolyte composition, the cells being present in multiple separate battery units, each unit comprising multiple cells electrically coupled in series, which units are electrically coupled in parallel, wherein the aluminium elements from each corresponding cell in one battery unit are operatively couplable for positioning of all of these elements into this battery unit in one uninterruptible process step.

### DEFINITIONS

*A vehicle* is a thing used for transporting people or goods, on land, by air or over water, such as a car, lorry, cart, bus, crane, airplane, boat etc. The vehicle may be able to drive from one location to another for the transport, but it may also be a (temporarily) stationary vehicle such as a crane that lifts goods from a dock into a boat, or a crane that digs material from the land such as an open mine.

*A professional* vehicle in the sense of this invention is a vehicle that is occupied with or engaged in commerce or work intended when performing a professional job. Thus, a private cate used for carrying people from one location to another in a private setting is not a professional vehicle. Typical examples of professional vehicles are a lorry, a bus, a crane, a ferry, a cargo ship, a tractor, an airplane, a military tank etc.

An *electric motor* is an electrical machine that converts electrical energy into mechanical energy.

*A battery* is a container consisting of one or more cells, in which chemical energy is converted into electricity and used as a source of power.

To *drive* means to provide the power to keep a machine working, in particular to operate and control a vehicle.

*A solid element* is a 3D solid object that can be seen with the naked human eye and grabbed by hand by a person having a normal locomotory system. A solid element at least has one dimension above 1 cm, which means that a powder grain or granule is not a solid element in the sense of the present invention.

An *aluminium air battery* is defined as a type of battery that uses aluminium as the anode and oxygen from the air as the cathode to generate electricity. Typically, high purity aluminium is used as the anode and potassium hydroxide or sodium hydroxide as the electrolyte solution (Tang et al, in Energy Storage Materials, 12 (2018), 284 - 309). Aluminium-air batteries (also denoted as al-air or alu-air batteries) produce electricity from the reaction of oxygen in the air with aluminium. Aluminium-air batteries are primary cells, i.e., they are non-rechargeable. Once the aluminium anode is consumed by its reaction with atmospheric oxygen at a cathode immersed in a water-based electrolyte to form hydrated aluminium oxide, the battery will no longer produce electricity.

*A plate* is an element that has an in essence flat shape (having in essence a 2D constitution), has a width and length, and a thickness that is small compared to its width and length, typically at least 5 times as small, such a s 6, 7, 8, 9, 10 or more times such as up to 100 times as small.

*Uninterruptible* means not able to be broken in continuity. An uninterruptible process step, once commenced, cannot be stopped until this process step is finished.

Units being *separate* means that these units are mechanically distinguishable as separate units in the 3D space. The units may be connected, but in that case the units are releasably connected, which means that they can be de-connected without imposing permanent damage to the units, for example using common tools like spanners, screw drivers or Allen keys.

An electric *cell* is the basic (smallest) unit that converts chemical energy into electrical energy. It consists of two different electrodes (anode and cathode) immersed in an electrolyte solution. A cell is typically connected to other cells in series, therewith forming a battery.

*A functionally empty* battery is a battery that is at least partly exhausted and deemed no longer fit to deliver electric energy required for performing a planned task. Functionally empty does not necessarily mean that the battery is technically completely empty in the sense that it cannot deliver any electric energy anymore. It means that the level of power content is such that battery needs to be recharged or replaced in order to be able and adequately deliver power for a planned action. Typically the battery at this stage has a capacity below 30% of its maximum capacity, but it may also be less than 25%, 20%, 15%, 10%, 5% or even less.

*A functionally full* battery is a battery that is not exhausted, typically having its maximum capacity or about its maximum capacity (i.e. over 70%, preferably over 75%, 80%, 85%, 90%, 95% or even 99% or more of its maximum capacity to store and deliver energy), and deemed fit to deliver electric energy required for performing a planned task.

*Industrial* means pertaining to systematic professional labour for some useful purpose or the creation of something of value.

### FURTHER EMBODIMENTS OF THE INVENTION

In a first further embodiment of the method according to the invention, the vehicle is only driven by using the said electric motor (also referred to as electro motor). Thus, the vehicle does not have a hybrid configuration wherein for example a combustion engine is also present to provide power to drive the vehicle. A hybrid option is only advantageous where the battery capacity is in fact too small for any planned task. However, by using an aluminium air battery, constituted from several separate battery units coupled in parallel, this does not need to be an issue.

In another embodiment of the method according to the invention, an aluminium air battery is used wherein each separate battery unit comprises between 5 and 100 cells, each of these cells being provided with one solid aluminium element. Depending on the type (shape) of the solid aluminium element, a maximum of 100 elements is found to be advantageous for allowing easy removal of the elements form a battery unit in one uninterruptible process step. A minimum of 5 is advantageous since below that number, the extra work of removing and reassembling separate relatively small (and thus more) units outweigh the time gained with the process of easy replacement of the elements. Preferably, the solid aluminium element in each cell has the form of a plate, and the plates in one unit are arranged in parallel. This makes simply, preferably automated, removal of the elements form each unit in one uninterruptible process step relatively easy. More preferably, each separate battery unit comprises between 12 and 96 plates, corresponding to about 12-96 volts or 12-48 plates for units that deliver 12-48 volt. Next to this, this seems to be an ideal number of plates for a simply and automatic plate removal and positioning process.

In yet another embodiment of the method according to the invention, the new battery is assembled from separate battery units that are distinguishable from the separate battery units released from the functionally empty battery. Thus, the battery is not reactivated in situ by reactivation of that same battery, it is simply replaced by a new functionally full battery. This saves down time of the vehicle. Preferably, the new battery is assembled from separate battery units at a location remote from the vehicle, the location in particular being a controlled industrial site. This adds to the reliability of the method since reactivation in a controlled environment decrease the chance of failures with the reactivation. Preferably, the new battery is assembled before the battery used for providing the electric energy to the vehicle is functionally empty, and in that the new battery is transported to the vehicle to arrive around the time (so not long before or after, typically withing 48 - 0 hours before, or at most withing 0-4 hours after) the battery used for providing the electric energy to the vehicle is functionally empty.

In still another embodiment of the method according to the invention, the aluminium elements are removed from each of the cells of one battery unit by removing all elements in one movement while the elements (preferably plates) are mechanically coupled to each other. Such a mechanical coupling, for example by using a clamping arrangement, was found to be very advantageous for easy and reliable removal of the aluminium plates. In an embodiment, the aluminium elements present in one battery unit are permanently mechanically coupled to each other when the battery is in use for providing electric energy. In the alternative, the aluminium elements present in one battery unit are not mechanically coupled to each other when the battery is in use for providing electric energy, but these elements are mechanically coupled only for positioning in and optionally removal from the said battery unit.

In again another embodiment of the method according to the invention, the battery comprises two or more electrically parallel arranged super units, each super unit comprising multiple separate battery units electrically coupled in parallel. This allows a method of operation wherein not all battery units are delivering power at the same time. When coupled in parallel, one or more super units can be shut off, when the instant demand for power is low, or to deplete the units in a consecutive order. This means that the battery in total may be used more effectively until empty.

In yet again another embodiment of the method according to the invention, a DC/DC converter is electrically coupled to the battery. This way, the actual number of cells per battery unit is no longer dependent on the required voltage, and thus, can be optimised regarding the (automated) removal process.

In again another advantageous embodiment, in addition to the aluminium air battery, the vehicle comprises a means for releasably storing energy generated by the vehicle, the means being chosen in particular from a flywheel, a capacitor and a rechargeable battery, such as a lithium battery. In this embodiment, energy generated by the vehicle, for example when breaking, lowering weight, driving downhill etc. does not need to be transformed into heat, but can be stored for use later on, for example when extra power is needed instantaneously. The feature as such is known from the art, but not in combination with a method according to the invention.

All embodiments of method according to the invention as described here above also pertain to the corresponding vehicle according to the invention.

The invention will now be further explained using the following examples of a specific embodiment of the invention.

### EXAMPLES

Fig. 1 Schematically shows an electric vehicle according to the invention.
Fig. 2 Schematically shows the constitution of an aluminium air battery out of multiple separate battery units.
Fig. 3 Schematically shows a cartridge station for removing solid aluminium plates from a functionally empty aluminium air battery.
Fig. 4 Schematically show the various stations in a factory for reactivating functionally empty aluminium air batteries.

### Figure 1

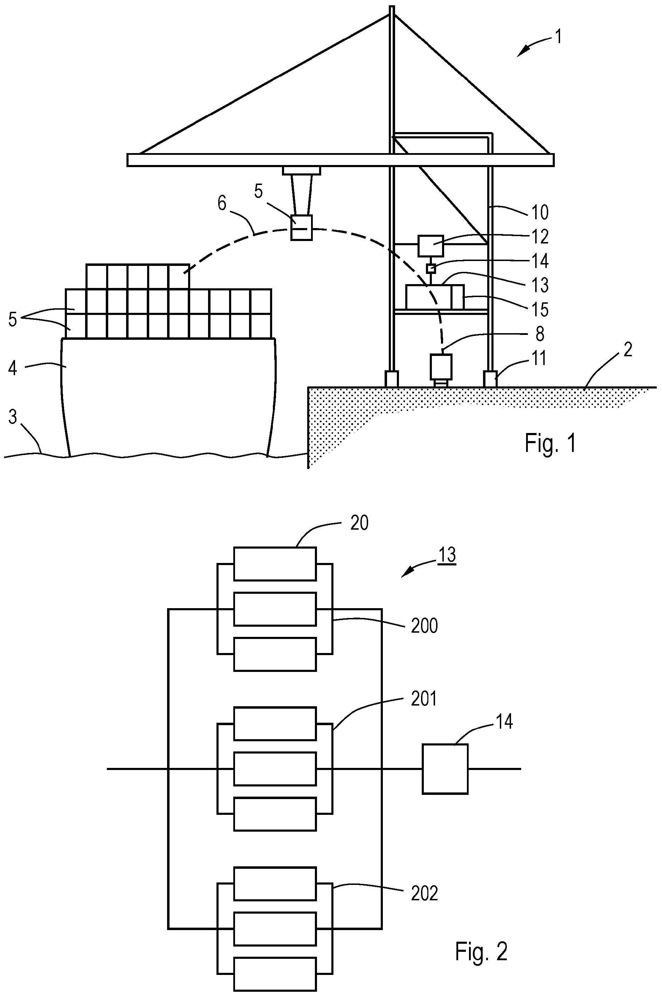

Figure 1 schematically shows an electric vehicle according to the invention, in this case a movable crane 1, having wheels 11, standing on dock 2 of a seaport, in order to unload containers 5 that are standing on a ship 4 that lies in the water 3, via path 6, onto a truck 8. The crane 1 has a frame 10 that carries i.a. the aluminium air battery 13. Also, a small rechargeable lithium battery 15 is present to store energy when due to lowering of a container energy is produced by the crane. The electric power is provided to an electric motor 12 via a DC/DC converter 14.

In an alternative embodiment (not shown), the aluminium air battery is positioned at a remote site and operatively coupled to the crane via electric wiring. It is also an option to position a row of such batteries, for example in big containers, such that when one battery is empty, a new full battery can be coupled to the crane instantly.

### Figure 2

Figure 2 schematically shows the constitution of an alu-air battery 13 out of multiple separate battery units 20. In this embodiment, in each case three separate battery units (cartridges) are coupled in parallel to form one super unit. Three of those super units (200, 201 and 202) on their turn or coupled in parallel to form the battery. This way, one super unit can deliver the required voltage (passed via DC/DC converter 14 to a motor), which has al kinds of advantages relating to the use of the individual battery units 20, and for the reliability of the battery 13 as a whole.

### Figure 3

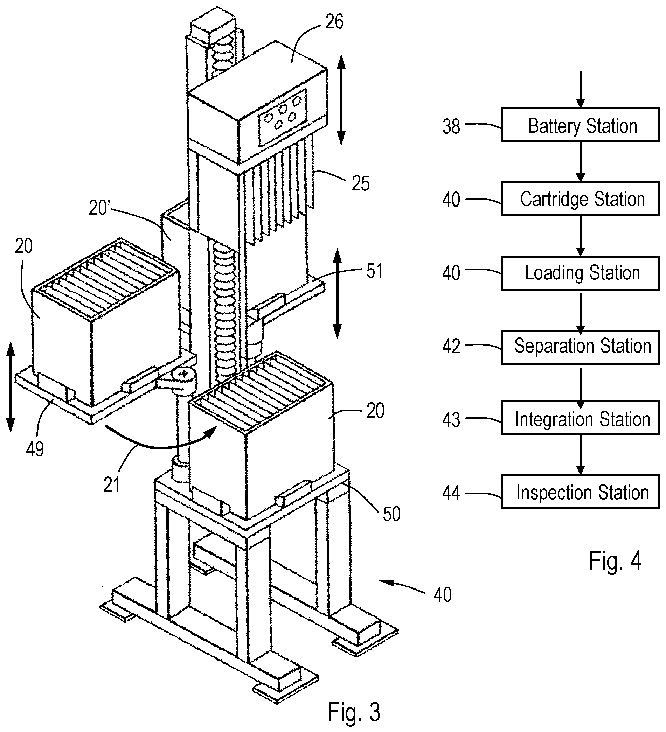

Figure 3 schematically shows a cartridge station 40 for removing and thereafter positioning solid aluminium plates 25 in a battery unit (cartridge) 20 of a functionally empty aluminium air battery, in one uninterruptible process step. As can be seen, a used battery unit 20 is positioned on a platform 49 and thereafter, as indicated by arrow 21, put in location 50. After that, unit 26 is lowered towards the unit 20. Unit 26 has a clamping means (not indicated as such in figure 3) which is able to clamp all aluminium plates such that they can be removed by simply moving unit 26 back up. Thereafter, the empty battery unit is put in position 51 for removal from the cartridge station. For positioning of new unused plates, the process takes place in opposite direction.

### Figure 4

Figure 4 schematically show the various stations in a factory for reactivating functionally empty aluminium air batteries. The first station 38 is the so-called Battery Station, in which station the separate battery units 20 are removed form the whole battery 13. At this station, the casing of the battery 13 is inspected and cleaned. All parts of the battery casing are checked for quality and replaced if deemed necessary. The second station 40 is called the Cartridge Station (see figure 3), since the separate battery units are also referred to as cartridges. At this station the lid of each battery unit is opened, and the plate (remnants) are removed as indicated in figure 3. The electrolyte is removed and all parts (e.g valves, cathodes, contacts etc.) are checked and replaced if deemed necessary. The third station 41 is called the Loading Station, at which station the new aluminium plates are positioned in the battery units in one uninterruptible process step as described here above with reference to figure 3). The fourth station 42 is the separation station, which in fact is a parallel station. At this station the rinsing fluids are collected, and the aluminium remnants, salt water and residual metals are separated. The aluminium and its oxides are collected in a pure form to allow smelting as a new aluminium product. Fresh electrolyte is prepared, and the necessary quality checks are done. Next, at the Integration Station 43, the fresh electrolyte, newly filled cartridges (i.e. the battery units 20) and battery casing come together and the battery units are provided with new electrolyte. After that, the units are assembled into the battery casing to provide a new battery 13. The battery is now ready for transport to a vehicle that needs a replacement battery in due course. Lastly, at the Inspection & Service Station 44, the replaced items are inspected for potential repair, if needed, or for recycling/discarding if beyond repair.

## Claims

1. Method of operating a professional vehicle, which vehicle has an electric motor for driving the said vehicle, and a battery operatively coupled to the vehicle for providing the electric energy to the electric motor, the method comprising the steps of:
- using as the said battery an aluminium air battery, which battery comprises multiple cells, each cell comprising a solid aluminium element immersed in an electrolyte composition, the cells being present in multiple separate battery units, each unit comprising multiple cells electrically coupled in series, which units are electrically coupled in parallel, thereby forming the said battery,
- in a timeframe of 24 hours, driving the vehicle and extracting at least 400 kWh of energy from the said battery, until this battery is functionally empty,
- decoupling the functionally empty battery from the vehicle,
- operatively coupling a functionally full battery to the vehicle,
- release each of the said battery units as separate individual units from the functionally empty battery,
- for each of the said separate individual battery units released from the functionally empty battery, 1) removing the aluminium elements from each corresponding cell, and 2) positioning unused solid aluminium elements in each of the cells in one single uninterruptible process step,
- and reassemble a new battery by electrically coupling in parallel, multiple of the said units that have been provided with unused solid aluminium elements.

2. A method according to claim 1, **characterised in that** in the method, the vehicle is only driven by using the said electric motor.

3. A method according to any of the preceding claims, **characterised in that** an aluminium air battery is used wherein each separate battery unit comprises between 5 and 100 cells, each of these cells being provided with one solid aluminium element.

4. A method according to claim 3, **characterised in that** the solid aluminium element in each cell has the form of a plate, and **in that** the plates in one unit are arranged in parallel.

5. A method according to claim 4, **characterised in that** each separate battery unit comprises between 12 and 96 plates, preferably between 12 and 48 plates.

6. A method according to any of the preceding claims, **characterised in that** the new battery is assembled from separate battery units that are distinguishable from the separate battery units released from the functionally empty battery.

7. A method according to claim 6, **characterised in that** the new battery is assembled from separate battery units at a location remote from the vehicle, the location in particular being a controlled industrial site.

8. A method according to claim 7, **characterised in that** the new battery is assembled before the battery used for providing the electric energy to the vehicle is functionally empty, and **in that** the new battery is transported to the vehicle to arrive around the time the battery used for providing the electric energy to the vehicle is functionally empty.

9. A method according to any of the preceding claims, **characterised in that** the aluminium elements are removed from each of the cells of one battery unit by removing all elements in one movement while the elements are mechanically coupled to each other.

10. A method according to claim 9, **characterised in that** the aluminium elements present in one battery unit are permanently mechanically coupled to each other when the battery is in use for providing electric energy.

11. A method according to claim 9, **characterised in that** the aluminium elements present in one battery unit are not mechanically coupled to each other when the battery is in use for providing electric energy, wherein these elements are mechanically coupled only for positioning in and optionally removal from the said battery unit.

12. A method according to any of the preceding claims, **characterised in that** the battery comprises two or more electrically parallel arranged super units, each super unit comprising multiple separate battery units electrically coupled in parallel.

13. A method according to any of the preceding claims, **characterised in that** the vehicle in addition to the aluminium air battery, comprises a means for releasably storing energy generated by the vehicle, the means being chosen in particular from a flywheel, a capacitor and a rechargeable battery, such as a lithium battery.

14. A professional vehicle, which vehicle has an electric motor for driving the said vehicle, and a battery operatively coupled to the vehicle for providing electric energy to the electric motor, the said battery being an aluminium air battery, which battery comprises multiple cells, each cell comprising a solid aluminium element immersed in an electrolyte composition, the cells being present in multiple separate battery units, each unit comprising multiple cells electrically coupled in series, which units are electrically coupled in parallel, thereby forming the said battery, the vehicle being designed to use in a timeframe of 24 hours at least 400 kWh, wherein the aluminium elements from each corresponding cell in one battery unit are operatively couplable for positioning of all of these elements in this battery unit in one uninterruptible process step.

15. An aluminium air battery for use in the method according to any of the claims 1 to 13, or the vehicle according to claim 14, which battery comprises multiple cells, each cell comprising a solid aluminium element immersed in an electrolyte composition, the cells being present in multiple separate battery units, each unit comprising multiple cells electrically coupled in series, which units are electrically coupled in parallel, wherein the aluminium elements from each corresponding cell in one battery unit are operatively couplable for positioning of all of these elements into this battery unit in one uninterruptible process step.
